# EUROPÄISCHE PATENTANMELDUNG

(11) **EP 1 172 311 A2**
(43) Veröffentlichungstag der Anmeldung: **16.01.2002**
(21) Anmeldenummer: 01115889.6
(22) Anmeldetag: 29.06.2001
(51) Int. Cl.: B65G 21/14, B65G 1/04

(54) **Lastaufnahmevorrichtung**

(30) Priorität: 14.07.2000 DE 20012197 U
(71) Anmelder: viastore systems GmbH, 70469 Stuttgart (DE)
(72) Erfinder: Dr. Meinhard Schumacher, 74889 Sinsheim (DE)
(74) Vertreter: KOHLER SCHMID + PARTNER

(57) **Zusammenfassung**

Um bei einer Lastaufnahmevorrichtung mit je einem insbesondere festen Unterteil 1 und einem durch ein Zug- oder Schubmittel 5 verschiebbaren Oberteil 10, wobei auf dem Oberteil 10 ein Transportband 12 gelagert ist, welches durch ein Zugmittel 13 angetrieben werden kann, ein besonders weites Ausfahren des Transportbandes 12 zu erreichen und gleichzeitig zu verhindern, dass das Transportgut während des Ausfahrens des Transportbandes 12 auf diesem mitbewegt wird, ist auf dem Unterteil 1 ein in Längsrichtung auf einer Linearführung oder dergleichen verschiebbarer Mitnehmer 2 mit einem Antriebsrad 3 geführt, welches mit einem, vom am Unterteil 1 angeordneten Zugmitteltrieb 5 angetriebenen Rad 4 verbunden ist, wobei sich die Durchmesser des Antriebsrades 3 und des Rades 4 unterscheiden und das Zugmittel 10 für das Transportband 12 mit dem Mitnehmer 2 verbunden ist.

## Beschreibung

Die Erfindung bezieht sich auf eine Lastaufnahmevorrichtung, insbesondere zum Ein- und Auslagern von Behältern in bzw. aus Regalen mit je einem insbesondere festen Unterteil und einem durch ein Zug-oder Schubmittel verschiebbaren Oberteil, wobei auf dem Oberteil ein Transportband gelagert ist, welches durch ein Zugmittel angetrieben werden kann. Um einerseits ein besonders weites Ausfahren des Transportbandes zu erreichen und gleichzeitig zu verhindern, dass das Transportgut während des Ausfahrens des Transportbandes auf diesem mitbewegt wird, ist erfindungsgemäß auf dem Unterteil ein in Längsrichtung auf einer Linearführung oder dergleichen verschiebbarer Mitnehmer oder dergleichen mit einem Antriebsrad geführt und ist weiterhin mit dem Antriebsrad ein durch einen am Unterteil angeordneten Zugmitteltrieb angetriebenes Rad verbunden, wobei sich die Durchmesser des Antriebsrades des Mitnehmers und des Rades unterscheiden und das Zugmittel für das Transportband mit dem Mitnehmer verbunden ist. Der Mitnehmer wird nunmehr mittels einer nicht dargestellten Zwangsführung in einem festen Untersetzungsverhältnis zum Oberteil angetrieben. Dabei macht der Mitnehmer einen anderen Weg als das Oberteil.

Vorzugsweise ist der Durchmesser des Antriebsrades des Mitnehmers größer als der des Rades. Durch diese Übersetzung im Mitnehmer wird nun erreicht, dass das Transportband genauso schnell zurückgezogen wird wie das Oberteil ausfährt. Durch Veränderung der Übersetzung der Räder kann die Bewegung des Transportbandes gezielt beeinflusst werden. Vorzugsweise erhält dabei das Transportband eine geringe Grundbewegung in die Bewegung des Oberteils aufgeprägt. Hierdurch wird erreicht, dass das Transportgut insbesondere ein Behälter bereits beim Unterfahren durch das Transportband leicht in entgegengesetzter Richtung bewegt wird und dadurch mehrere Behälter, welche zuvor eng aufeinander standen, vereinzelt werden. Umgekehrt werden die Behälter beim Zurückziehen des Oberteils durch das Transportband in Richtung der Regale geschoben, so dass diese im Regal wieder eng nebeneinander sitzen. Diese Grundbewegung erfolgt nur in Abhängigkeit der Bewegung des Oberteils, wobei der Antrieb des Transportbandes hierbei abgeschaltet sein kann. Dabei kann sein Antrieb je nach Steuerung auch erst später abgeschaltet sein.

Zweckmäßigerweise ist der am Unterteil angeordnete Zugmitteltrieb von einem Antrieb über zwei Umlenkrollen um das Rad geführt. Dabei verläuft vorzugsweise der Zugmitteltrieb über je zwei weitere Rollen am Antrieb und am Rad.

Die Zeichnung zeigt ein Ausführungsbeispiel der Erfindung. Es stellen dar:

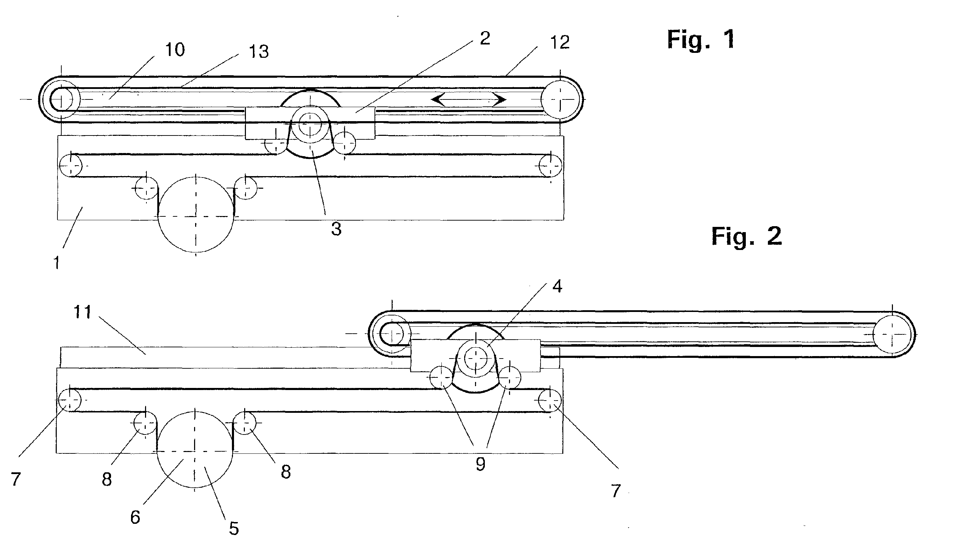

- Figur 1: eine schematische Darstellung des Lastaufnahmemittels in Mittelstellung,
- Figur 2: eine Darstellung gemäß Fig. 1 mit ausgefahrenem Oberteil.

Auf dem Unterteil 1 ist ein Mitnehmer 2 mittels einer Linearführung zwangsgeführt. Mit dem Antriebsrad 3 ist ein Rad 4 verbunden. Ein am Unterteil 1 vorgesehener Zugmitteltrieb 5 besteht aus einem Antrieb 6 und zwei Umlenkrollen 7, welche am jeweiligen Ende des Unterteiles 1 angeordnet sind. Der Zugmitteltrieb wird dann über das Rad 4 des Mitnehmers 2 geführt, wobei jeweils noch zwei Umlenkrollen 8 am Antrieb 6 und 9 am Rad 4 vorgesehen sind. Das Oberteil 10 ist auf dem Unterteil 11 längsverschiebbar gelagert und mit einem Transportband 12 versehen. Die Bewegungen des Transportbandes 12 erfolgen über ein Zugmittel 13, welches seinerseits mit dem Mitnehmer 2 verbunden ist. Durch die Übersetzung zwischen dem Antriebsrad 3 und dem Rad 4 wird, wie oben beschrieben, erreicht, dass das Transportband 12 ebenso schnell zurückbewegt wird wie das Oberteil 10 ausfährt.

## Patentansprüche

1. Lastaufnahmevorrichtung mit je einem insbesondere festen Unterteil und einem durch ein Zug-oder Schubmittel verschiebbaren Oberteil, wobei auf dem Oberteil ein Transportband gelagert ist, welches durch ein Zugmittel angetrieben werden kann, **dadurch gekennzeichnet, dass** auf dem Unterteil (1) ein in Längsrichtung auf einer Linearführung oder dergleichen verschiebbarer Mitnehmer (2) mit einem Antriebsrad (3) geführt ist, welches mit einem, vom am Unterteil (1) angeordneten Zugmitteltrieb (5) angetriebenen Rad (4) verbunden ist, wobei sich die Durchmesser des Antriebsrades (3) und des Rades (4) unterscheiden und das Zugmittel (10) für das Transportband (12) mit dem Mitnehmer (2) verbunden ist.

2. Vorrichtung nach Anspruch 1, **dadurch gekennzeichnet, dass** der Durchmesser der Antriebsrades (3) des Mitnehmers (2) größer als der des Rades (4) ist.

3. Vorrichtung nach einem oder beiden der vorhergehenden Ansprüche, **dadurch gekennzeichnet, dass** der am Unterteil (1) angeordnete Zugmitteltrieb (5) von einem Antrieb (6) über zwei Umlenkrollen (7) und das Rad (4) geführt ist.

4. Vorrichtung nach Anspruch 3, **dadurch gekennzeichnet, dass** der Zugmitteltrieb (5) über je zwei weitere Rollen (8,9) am Antrieb (5) und am Rad (4) verläuft.
